**Europäisches Patentamt**

**European Patent Office**

**Office européen des brevets**

(19)

(11) Veröffentlichungsnummer: **0 199 016**
**A2**

(12) # EUROPÄISCHE PATENTANMELDUNG

(21) Anmeldenummer: **86102331.5**

(22) Anmeldetag: **22.02.86**

(51) Int. Cl.⁴: **C 07 F 7/22**
**A 01 N 55/04**

(30) Priorität: **26.03.85 DE 3510812**

(43) Veröffentlichungstag der Anmeldung:
**29.10.86 Patentblatt 86/44**

(84) Benannte Vertragsstaaten:
**BE CH DE FR GB IT LI NL SE**

(71) Anmelder: **SCHERING AKTIENGESELLSCHAFT Berlin
und Bergkamen
Waldstrasse 14 Postfach 15 40
D-4709 Bergkamen(DE)**

(72) Erfinder: **Buschhoff, Max, Dr. Dipl.-Chem.
Auf dem Weidkamp 28
D-4670 Lünen(DE)**

(72) Erfinder: **Plum, Hans, Dr. Dipl.-Chem.
Sulkshege 12
D-4700 Hamm 5(DE)**

(54) **Durch Triorganozinn-Gruppen modifiziertes anorganisches Matrixmaterial.**

(57) Die Erfindung betrifft ein durch Triorganozinn-Gruppen modifiziertes anorganisches Matrixmaterial, herstellbar durch chemische Umsetzung von oxidischen oder silikatischen Füllstoffen mit reaktionsfähigen OH-Gruppen und Triorganozinnhydroxiden, Triorganozinnestern oder Hexaorganostannoxanen sowie ein Verfahren zu seiner Herstellung.

Bei dem Matrixmaterial handelt es sich um pulverförmige Produkte, die praktisch geruchlos sind. Das Matrixmaterial läßt sich ohne Schwierigkeiten in Materialien wie Pflanzenschutzmitteln, Antifoulingfarben, Holzschutzmitteln, Dispersionsfarben, Vergußmassen oder Kunststoffe einarbeiten und ergibt beständige, biozid hochwirksame Produkte.

EP 0 199 016 A2

Croydon Printing Company Ltd.

## Durch Triorganozinn-Gruppen modifiziertes anorganisches Matrixmaterial

Trialkylzinnverbindungen werden heute in großem Umfang zum Schutz von Materialien vor Befall durch Mikroorganismen wie Pilze, Bakterien und Algen, als Antifoulingwirkstoffe in der Schiffstechnik sowie als Wirkstoffe im Pflanzenschutz verwendet.

Bei diesen bioziden Trialkylzinnverbindungen handelt es sich im wesentlichen um Tributyl- sowie Tripropylzinnverbindungen. Verbindungen mit kürzeren oder längeren Alkylresten weisen eine wesentlich geringere biozide Wirkung auf und spielen auf diesem Gebiet eine geringere Rolle.

Im Pflanzenschutz finden insbesondere Tricyclohexyl- und Triphenylzinn-verbindungen Verwendung.

Die gebräuchlichsten Tributylzinnverbindungen sind Hexabutyldistannoxan (Synonym: Tributylzinnoxid) sowie Tributylzinnester wie z. B. Tributylzinnbenzoat, -naphthenat, -linoleat oder -abietat.

Diese Tributylzinnverbindungen stellen hochsiedende Flüssigkeiten mit relativ niedrigem Dampfdruck dar.

Sie sind in den gängigsten Lösungsmitteln und in normalen Anstrich-Bindemitteln gut löslich. In vielen Bindemitteln wie Chlorkautschuk oder Epoxidharzen sind sie dagegen unverträglich, was sich in starken Trocknungsverzögerungen oder der Ausbildung von klebrigen Oberflächen äußert.

Stellt man z. B. Antifoulingfarben auf Basis von Epoxid-Bindemitteln mit ca. 15 % Tributylzinnoxid, bezogen auf Trockenanstrich her, so ist die Antifoulingwirkung dieser Farben schon nach wenigen Monaten erschöpft; die Anstrichwerke sind dann von Meeresorganismen, wie Seepocken oder Muschel überwachsen. Obwohl die in einem derartigen An-

...

strich verwendete Menge an Tributylzinnoxid so groß ist, daß sie - gleichmäßige Abgabe an die Oberfläche vorausgesetzt - für einen wesentlich längeren Zeitraum wirksam sein müßte, tritt eine vorzeitige Erschöpfung des Anstrichs ein. Der Grund dafür liegt in der zu schnellen Migration des Tributylzinnoxids an die Lackoberfläche.

Die oben erwähnte schnelle Migration von Tributylzinnoxid eines bestimmten Antifoulinganstriches läßt sich nach US-PS 3,854,960 durch Verwertung von Adsorbaten eines Tributylzinnoxid mit pyrogenen Kieselsäuren oder auch modifizierten Montmorilloniten weitgehend verhindern und man erhält über einen langen Zeitraum wirksame Antifoulinganstriche. Diese Adsorbate haben aber einen Nachteil: Sie können das Fließverhalten der damit angesetzten Farben durch unerwünschte Verdickungs- oder Gelierungseffekte nachteilig beeinflussen.

In anderen Bindemittelsystemen, wie z. B. solchen auf Polyacrylat- oder auch Polyurethan-Basis, kann ein Zusatz von Tributylzinnoxid zu einer so starken Verringerung der Topfzeit führen, daß derartige Farben praktisch nicht mehr verarbeitbar sind.

Ein anderer Nachteil mancher flüssiger Tripropyl- und Tributylzinnverbindungen ist ihr relativ starker Geruch, der sich vor allem bei einer Verwertung in Innenräumen störend bemerkbar machen kann. Dieser Geruch ist besonders ausgeprägt bei den Tripropylzinnverbindungen. Obwohl letztere eine sehr starke biozide Wirkung besitzen, die zum Teil die der Tributylzinnverbindungen übertrifft, lassen sie sich wegen ihres durchdringendes Geruches in der Praxis nicht verwerten.

Bei einer Verwertung von Tributylzinnverbindungen als Biozide in Anstrichen oder auch in Holzschutzmitteln für

...

0199016

Innenräume ist die Abgaberate des Wirkstoffes an die Umgebungsluft von erheblicher Bedeutung. Hohe Abgabemengen können zu gesundheitlichen Schäden durch Inhalation der Wirkstoffe führen. Die Abgaberaten nehmen von Tributylzinnoxid bis zu den Tributylzinnestern langkettiger Carbonsäuren stark ab, so daß bestimmte Ester als Wirkstoffe in Innenräumen verwertet werden können.

Ein weiterer Nachteil der flüssigen Tributylzinnverbindungen ist ihre Reizwirkung auf die Haut von Warmblütern, die besondere Vorsichtsmaßnahmen erforderlich macht.

Aufgabe der vorliegenden Erfindung ist die Herstellung und Bereitstellung eines festen Substrates, das wirksame $SnR_3$-Gruppen in chemisch gebundener Form enthält, geruchslos ist und die rheologischen Eigenschaften von Lacken, Pasten und sonstigen Formulierungen, im Gegensatz zu den reinen Wirkstoffen, möglichst wenig verändert und die obengenannten Nachteile vermeidet.

Die Aufgabe wird erfindungsgemäß gelöst durch ein festes anorganisches Matrixmaterial, modifiziert durch Triorganozinn-Gruppen, welches herstellbar ist durch Umsetzung von oxidischen oder silikatischen Füllstoffen mit reaktionsfähigen OH-Gruppen und Triorganozinnhydroxiden, Triorganozinnestern oder Hexaorganostannoxanen.

Die Erfindung betrifft ferner ein Verfahren zur Herstellung von mit Triorganozinn-Gruppen modifiziertem anorganischen Matrixmaterial, das dadurch gekennzeichnet ist, daß man oxidische oder silikatische Füllstoffe mit reaktionsfähigen OH-Gruppen mit Triorganozinnhydroxiden, Triorganozinnestern oder Hexaorganostannoxanen in inerten organischen Lösungsmitteln unter Rückflußerhitzen und Abtrennung des Reaktionswassers bzw. der abgespaltenen Carbonsäure umsetzt.

...

- 4 -

Von den eingesetzten Triorganozinnverbindungen werden insbesondere Tri-n-butylzinnverbindungen, wie Hexabutyldistannoxan oder Tributylzinnacylate, z. B. Tributylzinnacetat, eingesetzt. Für die fungiziden und bakteriziden Einsatzzwecke kommen auch die entsprechenden Tri-n-propylzinn-Verbindungen infrage. Für Anwendungen im Pflanzenschutz werden zur Herstellung des Matrixmaterials insbesondere Triphenyl-, Trineophyl- und Tricyclohexylzinn-Verbindungen eingesetzt.

Als anorganisches Matrix-Material eignen sich oxidische oder silikatische Füllstoffe, die üblicherweise z. B. Wirkstoffen, Anstrichstoffen, Papier, Kunststoffen und dergleichen beigemischt werden, um deren Volumen oder Gewicht zu erhöhen oder die technische Verwendbarkeit zuu verbessern, wie Ton, Zeolithe, Talk, Aluminiumoxid, Kieselgel, Silicagel und ähnliche Verbindungen, die reaktionsfähige OH-Gruppen besitzen. Solche OH-Gruppen lassen sich auch durch bekannte Methoden erzeugen, so daß sich die Auswahl des anorganischen Materials auf all diejenigen Metalloxide erstrecken kann, bei denen eine Rehydroxilierung möglich ist. Besonders geeignet für den erfindungsgemäßen Zweck sind Aluminiumoxid und Kieselgel.

...

Als Medium für die Reaktion der an der Oberfläche des anorganischen Materials befindlichen OH-Gruppen mit der umzusetzenden Triorganozinnverbindung sind insbesondere alle Lösungsmittel geeignet, die mit Wasser ein Azeotrop bilden können und sich nicht mit den Reaktionspartnern umsetzen. Besonders geeignet sind aliphatische und aromatischen Kohlenwasserstoffe sowie Ether, z. B. Toluol, Xylol und Di-n-butylether.

Die Reaktionstemperatur ist im allgemeinen durch den Siedepunkt des Azeotrops gegeben. Oberhalb von 200 °C ist jedoch die thermische Stabilität der Organozinnverbindung zu bedenken. Gegebenenfalls kann durch Verminderung des Druckes die Siedetemperatur des Azeotrops erniedrigt werden.

Zur Herstellung des erfindungsgemäßen Matrixmaterials gibt man in ein beheizbares Rührgefäß mit Rückflußkühler und Wasserabscheider das Lösungsmittel, das anorganische Material sowie die umzusetzende Triorganozinnverbindung und erhitzt danach unter Rühren zum Sieden. Die Reaktion ist beendet, wenn im Destillat kein Wasser mehr abgeschieden wird. Man filtriert, wäscht den Filterkuchen und trocknet.

Falls Triorganozinnester eingesetzt werden sollen, sind zur schnelleren und vollständigeren Umsetzung im allgemeinen Ester leicht flüchtiger Carbonsäuren, z. B. Essigsäurestannylester, einzusetzen, bei denen die entstehende Säure aus dem Reaktionsmedium durch leichtes Erhitzen ausgetrieben werden kann.

Die Menge an Lösungsmittel wird zweckmäßig so bemessen, daß ein gutes Rühren gewährleistet ist. Sollen alle OH-Gruppen zur Reaktion gebracht werden, wird die Organozinn-

...

verbindung im Überschuß eingesetzt. Die Menge der OH-Gruppen des anorganischen Materials läßt sich mit Hilfe bekannter Methoden ermitteln. Man kann jedoch auch die hier beschriebene Reaktion selbst dazu verwenden.

Ein besonderer Vorteil der erfindungsgemäßen Organozinn-Verbindungen ist, daß sich durch Variation der Menge an Organozinnverbindung die Hydrophobie des Reaktionsproduktes einstellen läßt und so auf die vorgesehene Einsatzformulierung abgestimmt werden kann.

Bei dem erfindungsgemäßen Trialkylzinn-Gruppen enthaltenden Matrixmaterial handelt es sich um pulverförmige Produkte, die praktisch geruchslos sind. Entsprechend den besonders geeigneten Ausgangsverbindungen sind sie vorwiegend von weißer Farbe.

Im Gegensatz zu den flüssigen Tributylzinnverbindungen zeigen sie nur eine geringgradig hautreizende Wirkung, während die biozide Wirksamkeit, bezogen auf den Triorganozinngehalt, nicht beeinträchtigt wird.

Die Produkte lassen sich ohne Schwierigkeiten in Materialien wie Pflanzenschutzmitteln, Antifoulingfarben, Holzschutzmitteln, Dispersionsfarben, Vergußmassen oder Kunststoffe einarbeiten und ergeben beständige, biozid hochwirksame Produkte. Sie verursachen im allgemeinen keine Konsistenzänderung in den Substraten. So ändern sich z. B. in Farben auf Chlorkautschuk- oder Vinylharz-Basis weder Konsistenz noch Topfzeit nach Zugabe der erfindungsgemäßen Organozinn-Verbindungen in für die biozide Wirksamkeit erforderlichen Mengen.

...

BEISPIELE

a) Herstellung der Produkte
------------------------------

Beispiel 1

In einen 1 l-Dreihalskolben mit Rührer, Thermometer, Wasserabscheider und Rückflußkühler gibt man 500 ml Toluol, 200 g Kieselgel (Merck Kieselgel 60, Korngröße 0,063 - 0,200 mm; bei 150 °C im Trockenschrank getrocknet) und 100 g Hexabutyldistannoxan (TBTO). Man erhitzt unter Rühren und Rückfluß so lange, bis sich im Wasserabscheider kein Wasser mehr abscheidet, kühlt auf etwa 50 °C ab, filtriert, wäscht den Filterkuchen zweimal mit je 150 bis 200 ml Toluol und trocknet den Feststoff bei 80 °C im Trockenschrank. Man erhält 257 g Reaktionsprodukt (8,8 Gew.-% Sn; 74 mmol $(C_4H_9)_3Sn$/100 g Produkt).

Das Filtrat kann nach Bestimmung des TBTO-Gehaltes für weitere Umsetzungen verwendet werden.

Beispiel 2

Wie in Beispiel 1 beschrieben, wurden 160 g Aluminiumoxid (Alumina Grade B) mit TBTO umgesetzt und 191 g Reaktionsprodukt erhalten (6,5 Gew.-% Sn; 54 mmol $(C_4H_9)_3Sn$/ 100 g Produkt).

Beispiel 3

Wie in Beispiel 1 beschrieben, wurden 200 g Talk mit TBTO umgesetzt und 217 g Reaktionsprodukt erhalten (3,1 Gew.-% Sn; 26 mmol $(C_4H_9)_3Sn$/100 g Produkt).

...

## Beispiel 4

Wie in Beispiel 1 beschrieben, wurden 200 g Kieselgel mit Hexapropyldistannoxan umgesetzt und 263 g Reaktionsprodukt erhalten (11,1 Gew.-% Sn; 94 mmol $(C_3H_7)_3$Sn/100 g Produkt).

Weitere Beispiele sind in der folgenden Tabelle aufgeführt (Herstellung analog Beispiel 1):

| Bei-spiel | anorg. Matrix-Material | Organozinn-verbindung | Gew.-% Sn | mmol $R_3$Sn/100 g |
|---|---|---|---|---|
| 5 | Westone L3 (1) | TBTO | 7,2 | 61 |
| 6 | Katalysator K 10 (2) | TBTO | 7,2 | 61 |
| 7 | Katalysator KS (2) | TBTO | 10,0 | 84 |
| 8 | Kieselgel 60 (3) | Tri-n-butyl-zinnacetat | 4,0 | 34 |
| 9 | Kieselgel 60 (3) | Triphenyl-zinn-hy-droxid/-oxid | 6,7 | 56 |
| 10 | Kieselgel 60 (3) | Tricyclo-hexylzinn-hydroxid/-oxid | 6,1 | 51 |

(1) Bentonit der Fa. Southern Clay Prod.
(2) Bentonit der Fa. Süd-Chemie
(3) Produkt der Fa. Merck

b) Formulierungen
-------------------

1. Eine <u>Silicon-Paste</u> zur Verwendung im Sanitärbereich wird in üblicher Weise hergestellt aus

| 28,0 g | Silicon-Grundharz |
| 10,5 g | Siliconöl |
| 4,0 g | Silicon-Vernetzer |
| 5,0 g | Aerosil® (Degussa, Frankfurt) |
| 46,5 g | Kreide |
| 3,0 g | $TiO_2$ |
| 0,5 g | Dibutylzzinndiacetat |
| 2,5 g | Tripropyl-Silicagel-Produkt aus Herstellungsbeispiel 4 |

2. Ein stabilisiertes <u>Weich-PVC</u> wird in üblicher Weise hergestellt aus

| 63,0 g | Suspensions-PVC (K-Wert 70) |
| 29,0 g | Dioctylphthalat |
| 2,0 g | epoxiliertes Sojaöl |
| 1,5 g | Ba/Cd-Laurat |
| 2,5 g | Tributylzinn-Silicagel-Produkt aus Herstellungsbeispiel 1 |
| 2,0 g | $TiO_2$ |

3. <u>Saatgut-Beizmittel</u> gegen Weizensteinbrand, bestehend aus

| 30,0 g | Triphenylzinn-Silicagel-Produkt aus Herstellungsbeispiel 9 |
| 70,0 g | Talkum |

...

4. Formulierung eines <u>akariziden Stäubemittels</u>:

    25,0 g   Tricyclohexylzinn-Silicagel-Produkt aus
             Herstellungsbeispiel 10
    75,0 g   Kaolin.

5. Eine <u>Dispersionsfarbe</u> wird in üblicher Weise
hergestellt aus

    500 g   Polyvinylacetat-Polymerisat (50 %ig)
    250 g   Calcit
    150 g   $TiO_2$
     40 g   Testbenzin
    120 g   Hydroxyäthylzellulose (2 %ig)
     30 g   Na-Polyphopshat (10 %ig)
      3 g   Ammoniak (konzentriert)
     30 g   Wasser
     17 g   Tributylzinn-Silicagel-Produkt aus
             Herstellungsbeispiel 1

<u>c) Biozide Wirkung der Produkte</u>

<u>Beispiel 1</u>

Eine Dispersionsfarbe des Handels auf Acrylharz-Basis
wurde mit unterschiedlichen Mengen von Tributylzinn-Silicagel-Produkt aus Beispiel 1 aus gerüstet. Mit diesen Farben wurden Papierrundfilter bestrichen. Die Farbproben
wurden anschließend im Agar-Auflagetest gegen ausgewählte
Pilze und Bakterien auf ihre biozide Wirkung hin untersucht.

...

0199016

Wirkung gegen Bakterien

| Wirkstoff-gehalt | Bacillus mesentericus Hemmzone um Probe* | Bacillus subtilis Hemmzone um Probe* |
|---|---|---|
| 8 % | 8 - 10 mm | 8 - 10 mm |
| 4 % | 7 - 8 mm | 5 - 7 mm |
| 2 % | 3 - 4 mm | 2 - 3 mm |
| ohne Wirkstoff | 0 mm | 0 mm |

(* = Abstand vom Papierfilter)

. . .

## Wirkung gegen Pilze

| Wirkstoffgehalt | Asp. ustus Hemmzone* um Probe | Bewuchs auf Probe | Asp. vers. Hemmzone* um Probe | Bewuchs auf Probe | Trich. vir. Hemmzone* um Probe | Bewuchs auf Probe |
|---|---|---|---|---|---|---|
| 8 % | 3 – 4 mm | 0 | 4 – 5 mm | 0 | 5 mm | 0 |
| 4 % | 2 – 3 mm | 0 | 3 – 4 mm | 0 | 3 – 4 mm | 0 |
| 2 % | 1 – 2 mm | 0 | 1 – 2 mm | 0 | 1 mm | 0 |
| ohne Wirkstoff | 0 mm | +++ | 0 mm | +++ | 0 mm | +++ |

+++ = starker Bewuchs

(* = Abstand vom Papierfilter)

- 12 -

Beispiel 2

Antifoulingwirkung von Tributylzinn-Silicagel-Produkt

Zwei Antifoulingfarben auf Chlorkautschuk- bzw. Epoxid-Basis wurden mit dem Tributylzinn-Silicagel-Produkt aus Herstellungsbeispiel 1 ausgerüstet und einem Seewasser-Bewuchstest in der Nordsee (Cuxhaven) unterworfen.

Zusammensetzung: Chlorkautschuk-Anstrich

    19 g Chlorkautschuk Pergut S 20® (Bayer)
    13 g Chlorparaffin Wituchlor 544® (Chem. Werke Wittu)
    30 g $TiO_2$
    45 g TBT-Kieselgel-Produkt

Testergebnis: Der Anstrich blieb mehr als 600 Tage ohne
              Bewuchs durch Meeresorganismen

Zusammensetzung: Epoxid-Anstrich

    20 g Epoxidharz EUREPOX® 7001/75 (Schering AG)
    17 g Polyaminoamid-Härter EUREDUR® 423 (Schering AG)
    10 g $TiO_2$
    63 g TBT-Kieselgel-Produkt

Testergebnis: Der Anstrich blieb mehr als 600 Tage ohne
              Bewuchs durch Meeresorganismen.

Patentansprüche

1. Durch Triorganozinn-Gruppen modifiziertes anorganisches Matrixmaterial, herstellbar durch chemische Umsetzung von

   oxidischen oder silikatischen Füllstoffen mit reaktionsfähigen OH-Gruppen und Triorganozinnhydroxiden, Triorganozinnestern oder Hexaorganostannoxanen.

2. Verfahren zur Herstellung von mit Triorganozinn-Gruppen modifiziertem anorganischen Matrixmaterial, dadurch gekennzeichnet, daß man

   oxidische oder silikatische Füllstoffe mit reaktionsfähigen OH-Gruppen mit

   Triorganozinnhydroxiden, Triorganozinnestern oder Hexaorganostannoxanen

   in inerten organischen Lösungsmitteln unter Rückflußerhitzen und Abtrennung des Reaktionswassers bzw. der abgespaltenen Carbonsäure umsetzt.

3. Verfahren gemäß Anspruch 2, dadurch gekennzeichnet, daß man als oxidische bzw. silikatische Füllstoffe solche auf Basis von Aluminiumoxid, Siliziumoxid oder Clays einsetzt.

4. Verfahren gemäß den Ansprüchen 2 und 3, dadurch gekennzeichnet, daß man als Triorganozinnverbindungen Tri-n-butylzinnverbindungen einsetzt.

5. Verfahren nach Anspruch 4, dadurch gekennzeichnet, daß man als Tributylzinnverbindungen Hexa-n-butyldistannoxan einsetzt.

6. Verwendung des durch Triorganozinn-Gruppen modifizierten anorganischen Matrixmaterials als Fungizid, Bakterizid, Akarizid und Antifoulingwirkstoff in Formulierungen von Anstrichmitteln, Dichtungsmassen und Pflanzenschutzmitteln.